# EUROPÄISCHE PATENTANMELDUNG

(11) **EP 2 098 162 A1**
(43) Veröffentlichungstag der Anmeldung: **09.09.2009**
(21) Anmeldenummer: 09000854.1
(22) Anmeldetag: 22.01.2009
(51) Int. Cl.: A61B 5/00, G01D 9/00, G06K 19/00

(54) **Einrichtung und Verfahren zur Maschinenteilanalyse**

(30) Priorität: 29.02.2008 DE 102008011902
(71) Anmelder: Gebr. Heller Maschinenfabrik GmbH, 72622 Nürtingen (DE)
(72) Erfinder: Feigle, Bernd, 72622 Nürtingen (DE)
(74) Vertreter: Rüger, Barthelt & Abel Patentanwälte

(57) **Zusammenfassung**

Eine erfindungsgemäße Einrichtung und ein erfindungsgemäßes Verfahren zur technischen Analyse maschinenbautechnischer Baugruppen umfasst eine an der Baugruppe vorgesehene Speichereinrichtung, die alle analyserelevanten Daten fest an der Baugruppe verankert. Somit steht mit der Baugruppe sowohl im eingebauten als auch im ausgebauten Zustand unabhängig von sonstigen Datenquellen der gesamte zur Fehleranalyse erforderliche Datensatz zur Verfügung.

## Beschreibung

Die Erfindung betrifft eine.Einrichtung und ein Verfahren zur technischen Analyse maschinenbautechnischer Baugruppen.

Die Hersteller von Maschinen und deren Baugruppen unternehmen große Anstrengungen, um sicherzustellen, dass die betreffenden Maschinen und Baugruppen zuverlässig arbeiten und Ausfälle minimiert werden. Der Hersteller von Maschinen und Komponenten hat in der Regel aber wenig Kontrolle hinsichtlich der Einsatzbedingungen seiner Komponenten und Maschinen. Es wird deshalb versucht, die Einsatzbedingungen der einzelnen Komponenten einer Maschine zu erfassen. Dies gilt insbesondere hinsichtlich kritischer Komponenten.

Dazu schlägt beispielsweise die DE 10 2005 043 773 A1 für eine Druckmaschine vor, ein dort vorgesehenes Lager mit einer RFID-Einrichtung zu versehen. Diese RFID-Einrichtung steht mit einem Sensor in Verbindung, der Temperaturwerte, Kraftwerte und gegebenenfalls andere Werte an dem Lager erfasst und abspeichert. Die Momentanwerte werden von den Sensoren gesendet und von der RFID-Einrichtung empfangen sowie abgespeichert.

Weiter können auch Parameter des Lagers aufaddiert oder aufintegriert und abgespeichert werden. Des Weiteren ist eine Leseeinrichtung vorgesehen, mit der die in der RFID-Einrichtung gespeicherten Daten ausgelesen werden können. Hierzu nimmt die RFID-Einrichtung einen anderen Betriebsmodus ein, der beispielsweise durch die Leseeinrichtung initiiert wird. Mit der Leseeinrichtung können Belastungszustände sowie Verschleißzustände von Lagern genau überwacht werden.

Aus der US 2007/0114280 A1 ist ein System zur Identifikation und Wartungsverfolgung von Flugzeugkomponenten bekannt. Das System umfasst eine Anzahl von Flugzeugkomponenten sowie eine Anzahl von RFID-Etiketten sowie einen Transceiver, der dazu eingerichtet ist, an jedes der RFID-Etiketten ein Aktivierungssignal zu senden. Jedes RFID-Etikett ist einer gesonderten Flugzeugkomponente zugeordnet und enthält Identifikations- und Wartungsdaten speziell für die Flugzeugkomponente, der es zugeordnet ist. Der Transceiver ist dazu eingerichtet, die von jedem RFID-Etikett ausgesendete Information zu empfangen. Die von dem RFID-Etikett ausgesendete Information umfasst Identifikationsdaten und Wartungsdaten, Information, die eine Wartungshistorie der Flugzeugkomponente repräsentieren, der das RFID-Etikett zugeordnet ist. Die von dem RFID-Etikett empfangene Information wird zur Analyse des Zustands mit einer zentralen Datenbank abgeglichen.

Aus der GB 2 328 839 A ist ein Ventil mit einem RFID-Etikett bekannt, das eine maschinenlesbare Identifizierung des Ventils ermöglicht. Die auf dem RFID-Etikett abgelegten Daten dienen dazu, das Ventil Datensätzen zuzuordnen, die in einer Datenbank abgelegt sind. Dieses Prinzip verwirklicht den Gedanken einer zentralisierten Datenhaltung in einer Datenbank, die Daten einer großen Vielzahl von Ventilen erfasst, die im Feld vorhanden sind. Die Datenbank kann aber prinzipbedingt keine Daten über den Einsatz des Ventils enthalten. Sie taugt somit nicht zur Fehleranalyse.

Werden die vorgenannten Systeme auf Teile oder Baugruppen angewandt, die prinzipiell unterschiedlichen Einsatzbedingungen unterliegen können und auch in unterschiedlicher Weise benutzt oder in Zusammenhang mit unterschiedlichen Maschinen eingesetzt werden, gestatten die mit den in den RFID-Etiketten abgespeicherten Daten keine umfassende Fehleranalyse.

Davon ausgehend ist es Aufgabe der Erfindung, ein System zur verbesserten Fehleranalyse zu schaffen.

Diese Aufgabe wird mit der Einrichtung nach Anspruch 1 wie auch mit dem Verfahren nach Anspruch 9 gelöst:

Die erfindungsgemäße Einrichtung umfasst eine maschinenbautechnische Baugruppe, die ein einzelnes Maschinenteil oder auch eine aus mehreren Maschinenteilen zusammen gesetzte Baueinheit sein kann. Diese Baugruppe ist mit einer Speichereinrichtung beispielsweise in Gestalt eines RFID-Etiketts versehen, das auch als RFID-Tag bezeichnet wird. Die Speichereinrichtung ist dazu eingerichtet, an dem Einsatzort der Baugruppe Daten zur späteren Auswertung aufzunehmen und dauerhaft abzuspeichern. Der Einsatzort der Baugruppe kann beispielsweise eine Maschine sein, wie z.B. eine Werkzeugmaschine, in der die Baugruppe betrieben wird. Dabei ist die Verwendung der Baugruppe nicht auf eine spezifische Werkzeugmaschine festgelegt. Es kann sich bei der Baugruppe beispielsweise um eine in verschiedenen Maschinen oder unter unterschiedlichen Einsatzbedingungen gleichermaßen benutzbare Baugruppe handeln. Solche Baugruppen können beispielsweise Führungen, insbesondere Linearführungen, Spindeln, Motorspindeln oder anderes sein. Der Hersteller solcher Komponenten bzw. Baugruppen hat häufig weder auf die spezielle Verwendung der Baugruppe noch deren Belastung wirklich Einfluss. Beispielsweise kann es für Linearführungen und deren Antriebe einen Unterschied machen, ob sie in horizontaler oder vertikaler Einbaulage eingesetzt werden, ob sie typischerweise lange oder kurze Wege fahren und ob sie große oder geringe Stellkräfte aufbringen oder große oder geringe Massen bewegen müssen, einer Vorspannung ausgesetzt sind, ob sie starken oder schwachen Vibrationen, Schlägen und dergleichen unterliegen usw.

Die an der Baugruppe angeordnete Speichereinrichtung ist dazu eingerichtet, einsatzspezifische Informationen in Form von Daten aufzuzeichnen oder aufzunehmen und dauerhaft abzuspeichern. Wird die Baugruppe in Folge einer Wartung eines Ausfalls oder aus sonstigen Gründen an den Hersteller, d.h. den Herstell- oder einen gesonderten Serviceort zurückgeschickt, können dort die Daten ausgelesen werden. Die Daten sind vorzugsweise so umfassend, dass die nachfolgende Analyse allein aufgrund der in der Speichereinrichtung vorhandenen Daten erfolgen kann. Die Auswerteeinrichtung erhält alle für die Auswertung relevanten Daten von der Speichereinrichtung. Ein paralleler Datenpfad zur Übermittlung von auswertungsrelevanten Daten ist nicht erforderlich. Auch ist keine Datenbank erforderlich, aus der Eigenschaften der Baugruppe zu beziehen wären, um die Analyse durchzuführen.

Die von der Speichereinrichtung abgespeicherten Daten können Daten umfassen, die technischen Merkmale der Baugruppe kennzeichnen, Außerdem können Daten abgespeichert sein, die die Belastung der Baugruppe während ihrer Benutzung kennzeichnen.

Weiter können auf der Speichereinrichtung Daten abgelegt sein, die lastunabhängige Einsatzbedingungen erfassen. Zu solchen lastunabhängigen Einsatzbedingungen gehören beispielsweise die Einbaulage, der Typ der Werkzeugmaschine, in der die Baugruppe eingesetzt wird, den Kunden, bei dem die Baugruppe eingesetzt wird, den Ort in der Maschine, in der die Baugruppe eingesetzt wird oder ähnliches.

Außerdem können in der Speichereinrichtung weitere Daten, wie beispielsweise die Konstruktionsversion der Baugruppe, ihren Auslieferungszustand und ähnliches umfassen. Der Auslieferungszustand kann beispielsweise die Lagervorspannung, die Lagerjustage, die Wuchtgüte usw. sein. Diese Daten können sowohl beim Hersteller auf die Speichereinrichtung aufgebracht werden, wenn der Hersteller die Baugruppe in die Maschine einbaut, als auch beim Anwender, wenn ein Servicetechniker die Baugruppe beim Anwender in die Maschine einbaut. Weiter können vor Ort Wartungen in der Speichereinrichtung vermerkt werden, so dass ersichtlich wird, welche Wartungen über den Lebenszyklus an dem Bauteil bzw. der Baugruppe durchgeführt worden sind. Weitere Informationen, wie beispielsweise die Kennwerte, die einer zustandsorientierten Instandhaltung zugrunde gelegt worden sind, können ebenfalls abgespeichert werden. Dies kann schon herstellerseitig oder auch erst am Einsatzort geschehen.

Somit trägt die Speichereinrichtung, die fest an der Baugruppe angebracht ist, alle Informationen, die erforderlich sind, um eine Ausfallanalyse vorzunehmen. Eine ausgebaute Baugruppe kann vom Einsatzort an einen gesonderten Serviceort oder zum Herstellort zurückgeschickt werden und stellt dort auf ihrer Speichereinrichtung alle relevanten Daten zur Verfügung. Es ist kein Zugriff auf eine gesonderte Datenbank erforderlich sondern alle zur Analyse erforderlichen Daten sind an der Baugruppe selbst angebracht.

Weitere Merkmale insbesondere des erfindungsgemäßen Verfahrens sind Gegenstand der nachfolgenden Beschreibung, der Zeichnung oder von Ansprüchen. Die Beschreibung beschränkt sich dabei auf wesentliche Aspekte der Erfindung und sonstiger Gegebenheiten. Die Zeichnung enthält weitere Details und ist ergänzend heranzuziehen. Es zeigen:
Figur 1 eine Werkzeugmaschine mit eingebauter Baugruppe in aufs Äußerste schematisierter Blockdarstellung, reduziert auf wenige hier relevante Komponenten,
Figur 2 die Herstellung einer Baugruppe zur Verwendung in einer Werkzeugmaschine in einer aufs Äußerste reduzierten Blockdarstellung,
Figur 3 einen Serviceort zur Analyse der Baugruppe in reduzierter Blockdarstellung und
Figur 4 die Baugruppe mit ihrer Speichereinrichtung als Blockbild.

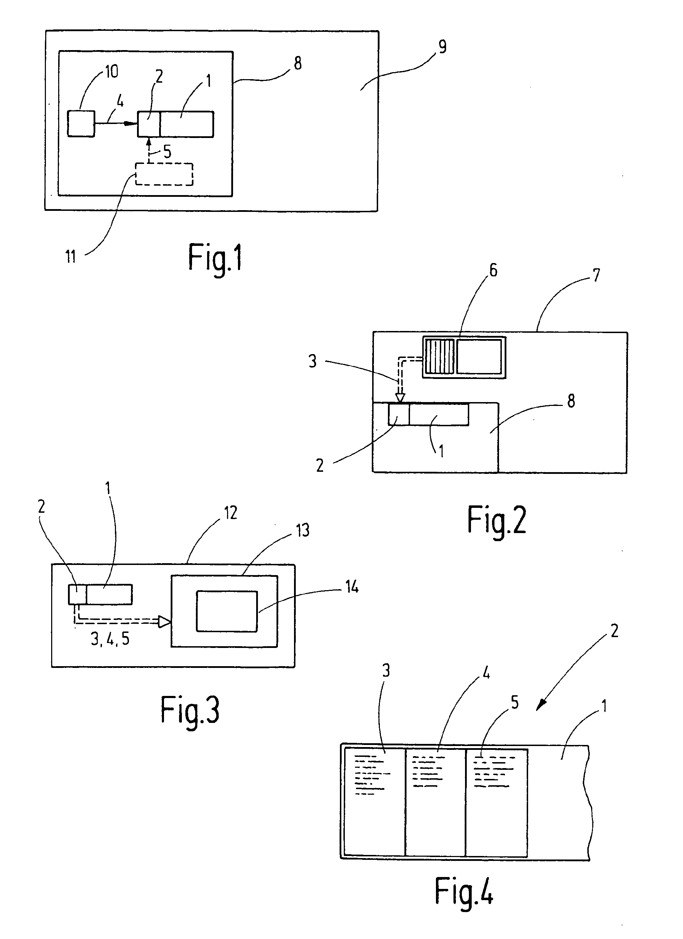

Die Figuren 1 bis 3 veranschaulichen ein System zur technischen Analyse maschinentechnischer Baugruppen 1, wie beispielsweise typischer Baueinheiten von Werkzeugmaschinen. Eine solche Baueinheit ist in den Figuren 1 und 2 jeweils durch ein Rechteck gekennzeichnet. Tatsächlich handelt es sich z.B. um Werkzeugspindeln, Drehtische, Linearführungen, Stellantriebe oder sonstige Baueinheiten.

Die Baugruppe 1 enthält eine in den Figuren ebenfalls durch ein Kästchen angedeutete Speichereinheit 2, mit einer gegebenenfalls zugehörigen nicht weiter dargestellten Datenübertragungseinrichtung. Die elektronische Speichereinrichtung 2 ist körperlich und vorzugsweise unlösbar mit der Baugruppe 1 verbunden. Vorzugsweise ist sie an einer unzugänglichen Stelle angeordnet. Die Speichereinrichtung kann beispielsweise als RFID-Etikett ausgebildet sein. Sie enthält einen Speicher, der in Figur 4 symbolisch veranschaulicht ist. In den Speicher können in verschiedenen Zonen oder gemischt Daten 3, 4, 5 abgespeichert werden, die verschiedene Sachverhalte betreffen. Z.B. können die Daten 3 Daten sein, die vom Hersteller der Baugruppe oder der Werkzeugmaschine aufgebracht werden, um die Baugruppe 1 selbst sowie Einsatzbedingungen zu kennzeichnen, die durch die Werkzeugmaschine vorgegeben sind, in der die Baugruppe angewendet wird. Wie Figur 2 veranschaulicht, werden diese Daten 3 beispielsweise mittels einer geeigneten Eingabeeinrichtung 6 herstellerseitig auf die Speichereinrichtung 2 aufgebracht.

In Figur 2 ist ein Herstellort 7 symbolisiert, der beispielsweise durch eine Maschinenfabrik oder deren Werkstätten gebildet wird. Die Baugruppe 1 wird an dem Herstellort 7 in eine Werkzeugmaschine 8 eingebaut, wobei Informationen über diese Maschine ebenfalls auf dem Speicher 2 der Baugruppe 1 abgespeichert werden. Die Werkzeugmaschine 8 wird dann an einen Einsatzort 9 verbracht und dort in Betrieb genommen. In der Werkzeugmaschine erhält die Speichereinrichtung 2 Daten 4, beispielsweise von einer Sensoreinrichtung 10 oder einer Maschinensteuerung. Die Sensoreinrichtung 10 kommuniziert über eine nicht weiter veranschaulichte Kommunikationseinrichtung mit der Speichereinrichtung 2. Sie kann von der Sensoreinrichtung 10 erfasste Informationen über die auf die Baugruppe 1 einwirkende Last erfassen und an die Speichereinrichtung 2 zur Abspeicherung übermitteln. Die Maschinensteuerung kann weitere Parameter, wie beispielsweise Regelungsparameter (P, I, D) oder ähnliches an die Speichereinrichtung 2 übertragen. Außerdem kann ein Wartungstechniker mittels einer geeigneten gestrichelt dargestellten Eingabeeinrichtung 11 Daten an die Speichereinrichtung 2 übergeben. Solche Daten können beispielsweise Informationen über durchgeführte Wartungen, die Bedingungen unter denen die Wartung durchgeführt wurde, oder ähnliches sein (Daten 5). Es ist auch möglich, dass der Wartungstechniker in geeigneten Speicherabschnitten Textnachrichten hinterlegt.

Wird die Baugruppe 1 nun zur Wartung oder wegen eines Ausfalls oder aus sonstigen Gründen aus der Werkzeugmaschine 8 ausgebaut und entweder an den Herstellort 7 oder einen gesonderten Serviceort 12 zurückgesandt, können dort mit einer geeigneten Ein- und Ausgabeeinrichtung 13 alle Daten 3, 4, 5 ausgelesen und verarbeitet werden. Die Auswerteeinrichtung 13 kann dabei insbesondere eine Analyse vornehmen, die nicht nur das aufgezeichnete Lastkollektiv sondern auch die spezifischen Einbau- und Betriebsbedingungen der Baugruppe 1 einbezieht. Es können alle Daten 3, 4, 5 d.h. die herstellerseitig aufgebrachten Daten 3, die die Einbaubedingungen und grundsätzlichen Lastbedingungen kennzeichnen, die Daten 4, d.h. das Lastkollektiv und die Daten 5, die der Servicetechniker hinterlegt haben mag, in die Auswertung einbezogen werden.

Die Auswerteeinrichtung 13 kann außerdem eine Datenbank 14 enthalten, die die Daten mehrerer oder aller nacheinander zurückgelieferten Baugruppen 1 sammelt und statistisch analysiert. Daraus können Servicetechniker oder entsprechende Datamining-Routinen oder sonstige statistische Tools verschiedene Empfehlungen ableiten. Die Empfehlungen können interner Natur oder auch für den Kunden bestimmt sein. Sie können eine Basis für eine generelle technische Verbesserung der Baugruppe oder für eine kundenspezifische Verbesserung der Baugruppe sein. Außerdem kann eine Änderung der Belastung bzw. des Lastkollektivs kundenspezifisch empfohlen werden. Es können auch Maßnahmen abgeleitet werden, die eine Veränderung der Maschine betreffen. Ebenso können Steuerparameter, wie beispielsweise PI- und D-Anteil einer Regelkette auf dem Datenspeicher geändert werden. Bei Rücklieferung der Baugruppe 1 an den Einsatzort 9 kann die Maschinensteuerung die geänderten Parameter PI und D oder sonstige technische Parameter aus der Speichereinrichtung 2 auslesen und hinfort mit den geänderten Parametern arbeiten.

Die Baugruppe 1 kann Daten (z.B. Regelparameter P, I, D, maximale Stellgeschwindigkeiten, Drehzahlen, Beschleunigung, Stellkräfte usw.) zum Betrieb einer eigenen kleinen Steuereinrichtung der Baugruppe 1 oder auch Daten enthalten, die zum Betrieb der Maschinensteuerung an diese übergeben werden. In beiden Fällen können die entsprechenden Daten nach Durchführung der Datenanalyse am Serviceort 12 oder auch am Herstellort 7 geändert und für den weiteren Betrieb der Werkzeugmaschine 6 und/oder der Baugruppe 1 zugrunde gelegt werden. Damit wird insgesamt das Datenmanagement erleichtert und die Qualität der Baugruppen 1 aus Sicht des Kunden deutlich verbessert, denn es werden Fehlerquellen ausfindig gemacht und Fehler ausgemerzt.

Die Baugruppe kann an dem Herstellort 7 oder dem gesonderten Serviceort 12 einer Analyse unterzogen werden. Die Analyse kann den Verschleiß oder den sonstigen Zusatand der Baugruppe betreffen. Z.B. können Spiel, Verschmutzung Beschädigungen u.ä. erfasst werden. Das so erhaltene Analyseergebnis kann zusammen mit Daten, die aus der der Speichereinrichtung 2 ausgelesen worden oder aus diesen Daten gewonnen wurden, in der Datenbank 14 abgespeichert werden.

Eine erfindungsgemäße Einrichtung und ein erfindungsgemäßes Verfahren zur technischen Analyse maschinenbautechnischer Baugruppen umfasst eine an der Baugruppe vorgesehene Speichereinrichtung, die alle analyserelevanten Daten fest an der Baugruppe verankert. Somit steht mit der Baugruppe sowohl im eingebauten als auch im ausgebauten Zustand unabhängig von sonstigen Datenquellen der gesamte zur Fehleranalyse erforderliche Datensatz zur Verfügung.

### Bezugszeichen

- 1: Baugruppe
- 2: Speichereinrichtung
- 3, 4, 5: Daten
- 6: Eingabeeinrichtung
- 7: Herstellort
- 8: Werkzeugmaschine
- 9: Einsatzort
- 10: Sensoreinrichtung
- 11: Eingabeeinrichtung
- 12: Serviceort
- 13: Ausleseeinrichtung
- 14: Datenbank

## Patentansprüche

1. Einrichtung zur technischen Analyse maschinenbautechnischer Baugruppen (1),
mit einer an der Baugruppe (1) angeordneten Speichereinrichtung (2), die dazu eingerichtet ist, an dem Einsatzort (9) der Baugruppe (1) Daten (4, 5) zur späteren Auswertung aufzunehmen und dauerhaft abzuspeichern,
mit einer Auswerteeinrichtung (13), die an einer von dem Einsatzort (9) der Baugruppe (1) entfernten Stelle angeordnet ist und eine Leseeinrichtung zum Auslesen der Daten (3, 4, 5) aus der Speichereinrichtung (2) der vom Einsatzort getrennten Baugruppe (1) aufweist,
wobei die Auswerteeinrichtung (13) dazu alle für die Auswertung relevanten Daten (3, 4, 5) von der Speichereinrichtung (2) erhält.

2. Einrichtung nach Anspruch 1, **dadurch gekennzeichnet, dass** die Speichereinrichtung (2) sowohl von Sensoren (10) aufgenommene Daten (4) als auch Daten (3, 5) trägt, die mittels einer Eingabeeinrichtung (6, 11) eingegeben worden sind, um lastunabhängige Einsatzbedingungen zu erfassen.

3. Einrichtung nach Anspruch 1, **dadurch gekennzeichnet, dass** wenigstens einige der Daten (4, 5) von einer Kommunikationseinrichtung (10, 11) an dem Einsatzort (9) der Baugruppe (1) auf die Speichereinrichtung (2) gegeben werden.

4. Einrichtung nach Anspruch 3, **dadurch gekennzeichnet, dass** die von der Kommunikationseinrichtung (10, 11) übermittelten Daten (4, 5) Codes umfassen, die den Kunden, die Maschine (8), die an dem Einsatzort (9) aufgestellt ist, und/oder den Einbauort in der Maschine (8) kennzeichnen.

5. Einrichtung nach Anspruch 3, **dadurch gekennzeichnet, dass** die von der Kommunikationseinrichtung (10) aufgegebenen Daten (4) das Lastkollektiv betreffen.

6. Einrichtung nach Anspruch 1, **dadurch gekennzeichnet, dass** wenigstens einige der Daten (3) von einer Kommunikationseinrichtung (6) an dem Herstellort (7) der Baugruppe (1) auf die Speichereinrichtung (2) gegeben werden.

7. Einrichtung nach Anspruch 5, **dadurch gekennzeichnet, dass** die von der Kommunikationseinrichtung (6) übermittelten Daten (3) die Konstruktionsversion der Baugruppe (1) kennzeichnen.

8. Einrichtung nach Anspruch 5, **dadurch gekennzeichnet, dass** die von der Kommunikationseinrichtung (6) übermittelten Daten (3) den Auslieferungszustand der Baugruppe (1) kennzeichnen.

9. Verfahren zur technischen Analyse maschinenbautechnischer Baugruppen (1), bei dem:
eine Baugruppe (1) an ihrem Herstellort (7) mit einer Speichereinrichtung (2) versehen und in der Speichereinrichtung (2) Daten (3) über den Zustand der Baugruppe (1) abgelegt werden,
die Baugruppe (1) zusammen mit der fest an ihr angebrachten Speichereinrichtung (2) von dem Herstellort (7) an den Einsatzort (9) gebracht wird,
in der an der Baugruppe (1) angeordneten Speichereinrichtung (2) an dem Einsatzort (9) der Baugruppe (1) Daten (4, 5) zur späteren Auswertung aufgenommen und dauerhaft abgespeichert werden,
die Baugruppe (1) zusammen mit der fest an ihr angebrachten Speichereinrichtung (2) von dem Einsatzort (9) an den Herstellort (7) oder einen gesonderten Serviceort (12) gebracht wird,
die Daten (3, 4, 5) an dem Herstellort (7) oder dem gesonderten Serviceort (12) mit einer Auswerteeinrichtung (13) ausgelesen und ausgewertet werden, wobei die Auswerteeinrichtung (12) dazu alle für die Auswertung relevanten Daten (3, 4, 5) von der Speichereinrichtung (2) erhält.

10. Verfahren nach Anspruch 9, **dadurch gekennzeichnet, dass** die Speichereinrichtung (2) zusätzlich zu den an dem Herstellort (7) aufgenommenen Daten (4, 5) an dem Einsatzort (9) von Sensoren (10) Daten (4) erhält.

11. Verfahren nach Anspruch 9, **dadurch gekennzeichnet, dass** an dem Einsatzort (9) Daten (5) mittels einer Eingabeeinrichtung (11) eingegeben werden, um last- und betriebsunabhängige Einsatzbedingungen zu erfassen.

12. Verfahren nach Anspruch 9, **dadurch gekennzeichnet, dass** wenigstens einige der Daten (4, 5) von einer Kommunikationseinrichtung (10, 11) an dem Einsatzort (9) der Baugruppe (1) auf die Speichereinrichtung (2) gegeben werden.

13. Verfahren nach Anspruch 12, **dadurch gekennzeichnet, dass** die von der Kommunikationseinrichtung (10) aufgegebenen Daten (4) das Lastkollektiv betreffen.

14. Verfahren nach Anspruch 9, **dadurch gekennzeichnet, dass** wenigstens einige der Daten (3) von einer Kommunikationseinrichtung (6) an dem Herstellort (7) der Baugruppe (1) auf die Speichereinrichtung (2) gegeben werden.

15. Verfahren nach Anspruch 14, **dadurch gekennzeichnet, dass** die von der Kommunikationseinrichtung (6) übermittelten Daten (3) die Konstruktionsversion der Baugruppe (1) kennzeichnen.

16. Verfahren nach Anspruch 14, **dadurch gekennzeichnet, dass** die von der Kommunikationseinrichtung (6) übermittelten Daten (3) den Auslieferungszustand der Baugruppe (1) kennzeichnen.

17. Verfahren nach Anspruch 9, **dadurch gekennzeichnet, dass** die Daten (3, 4, 5) von benutzten und rückgelieferten Baugruppen (1) an dem Herstellort (7) oder einem gesonderten Serviceort (12) in einer Datenbank (14) gesammelt und einer statistischen Ausfallanalyse unterzogen werden.

18. Verfahren nach Anspruch 9, **dadurch gekennzeichnet, dass** die Daten (3, 4, 5) Betriebsparameter umfassen, die an eine Maschinensteuerung der Werkzeugmaschine (8) oder eine Steuerungseinrichtung der Baugruppe (1) übergeben werden, um deren Betrieb zu beeinflussen.

19. Verfahren nach Anspruch 9, **dadurch gekennzeichnet, dass** die Baugruppe an dem Herstellort (7) oder dem gesonderten Serviceort (12) einer Analyse unterzogen und das Analyseergebnis zusammen mit Daten der Speichereinrichtung (2) oder aus diesen Daten gewonnenen Daten in einer Datenbank abgespeichert wird.
